# FASCICULE DE BREVET EUROPEEN

(11) **EP 3 504 480 B1**
(45) Date de publication et mention de la délivrance du brevet: **09.03.2022**
(21) Numéro de dépôt: 17743272.1
(22) Date de dépôt: 11.07.2017
(51) Int. Cl.: F23R 3/00, F02C 7/08

(54) **TURBINE MODULAIRE AVEC ECHANGEUR DE CHALEUR POUR LA PRODUCTION D'ENERGIE ELECTRIQUE**
MODULARE TURBINE MIT WÄRMETAUSCHER ZUR ERZEUGUNG VON ELEKTRISCHER ENERGIE
MODULAR TURBINE WITH HEAT EXCHANGER FOR PRODUCING ELECTRICAL ENERGY

(30) Priorité: 29.08.2016 FR 1657992
(43) Date de publication de la demande: 03.07.2019
(73) Titulaire: IFP Energies nouvelles, 92852 Rueil-Malmaison (FR)
(72) Inventeur: BAYA TODA, Hubert, 75019 Paris (FR); MICHEL, Jean-Baptiste, 92500 Rueil Malmaison (FR); THIRIOT, Julien, 92500 Rueil Malmaison (FR)
(74) Mandataire: IFP Energies nouvelles
(86) Numéro de dépôt international: PCT/EP2017/067433
(87) Numéro de publication internationale: WO 2018/041454

(56) Documents cités:
- GB-A- 597 853
- US-A- 3 054 257
- US-A- 3 079 754
- US-A1- 2003 061 800

## Description

La présente invention se rapporte à une turbine, notamment à une turbine à cycle thermodynamique avec échangeur de chaleur, pour la production d'énergie, notamment d'énergie électrique.

Elle concerne plus particulièrement une microturbine avec récupérateur pour la production d'électricité à partir d'un combustible liquide ou gazeux.

Généralement, il est entendu par microturbine une turbine de petite puissance usuellement inférieure à 200KW.

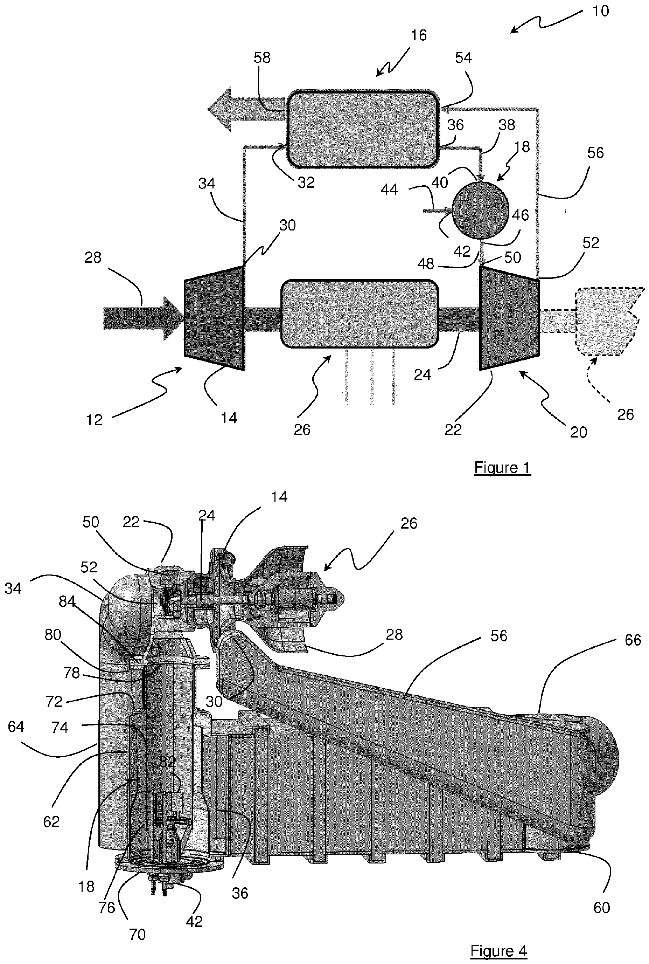

Comme est mieux montré par la figure 1, qui illustre une turbine de l'art antérieur, cette turbine 10 comprend au moins un étage de compression 12 avec au moins un compresseur de gaz 14, un échangeur de chaleur 16 (ou récupérateur), une chambre de combustion 18 (ou brûleur), au moins un étage de détente 20 avec au moins une turbine de détente 22 reliée par un arbre 24 au compresseur. Cette turbine comprend également un moyen de production d'énergie, ici électrique, qui comprend une génératrice électrique 26 placée avantageusement sur l'arbre 24 entre le compresseur et la turbine.

Bien entendu et comme cela est illustré en traits pointillés sur la figure, cette génératrice peut être alternativement reliée à la turbine de détente par un arbre autre que celui reliant la turbine et le compresseur.

De manière préférentielle, l'échangeur de chaleur 16 est un échangeur à flux croisés, par exemple de type tubes-calandre ou à plaques alternées avec deux entrées et deux sorties.

Le compresseur 14 comprend une entrée 28 d'un gaz frais contenant de l'oxygène, ici de l'air extérieur généralement à température ambiante, et une sortie de gaz comprimé 30 aboutissant à une entrée de gaz comprimé 32 de l'échangeur 16 par une conduite 34. La sortie de gaz comprimé chaud 36 de cet échangeur est reliée par une ligne 38 à une admission de gaz comprimé chaud 40 de la chambre de combustion 18. Cette chambre de combustion comprend également une arrivée de combustible 42 reliée par une canalisation 44 à un réservoir (non représenté) pour l'introduction d'un combustible dans cette chambre de combustion. La sortie de gaz comprimé surchauffé 46 de la chambre de combustion est connectée par une ligne 48 à l'entrée 50 de la turbine de détente dont la sortie 52 est reliée à une autre entrée 54 de l'échangeur par un conduit de gaz détendu surchauffé 56. L'échangeur 16 comprend également une sortie de gaz détendu refroidi 58 pour être dirigé vers tous moyens d'évacuation et de traitement, comme une cheminée (non représentée).

Les demandes de brevet US 2003/061800, US 3 079 754 et US 3 054 257 concernent des turbines à gaz. La demande de brevet US 2003/061800 montre une turbine avec échangeur de chaleur pour la production d'énergie électrique selon le préambule de la revendication 1.

Cette architecture de turbine bien que donnant satisfaction présentent des inconvénients non négligeables.

En effet, l'échangeur pose des problématiques importantes d'encombrement afin de garantir un rendement électrique satisfaisant puisque, en fonction de la technologie de l'échangeur, son volume peut augmenter d'un facteur 10.

Généralement, la technologie la plus utilisée pour ce type d'échangeur est la technologie d'échangeur à plaques à flux croisés pour laquelle des plaques très fines de l'ordre de 0,3 à 0,2 mm sont généralement utilisées afin de réduire le volume d'un tel échangeur.

Néanmoins, le volume de l'échangeur reste important en comparaison des autres composants de la turbine. Il se pose alors un problème pour respecter les contraintes fortes d'intégration dans les applications embarquées.

La présente invention permet de remédier aux inconvénients précités grâce à une conception modulaire de certaines parties de la turbine et plus particulièrement au regroupement de la chambre de combustion et de l'échangeur en un seul composant permettent de concevoir une architecture compacte.

Cette architecture permet ainsi de réduire fortement le volume de la turbine et d'atteindre des gains en volume de l'ordre de 30 à 40% en comparaison de l'art antérieur.

Elle permet également d'augmenter les performances du cycle et de réduire le coût de l'ensemble en réduisant les pertes de charges, notamment entre l'échangeur et la chambre de combustion, et le nombre des pièces.

Elle permet également d'augmenter les performances du cycle et de réduire le coût de l'ensemble en réduisant les pertes de charges, notamment entre l'échangeur et la chambre de combustion, et le nombre des pièces.

A cet effet, la présente invention concerne une turbine, notamment turbine avec échangeur de chaleur pour la production d'énergie électrique selon la revendication 1.

La paroi de la boîte collectrice de sortie de gaz comprimé peut former le boîtier de la chambre de combustion.

La boîte collectrice de sortie peut porter une embase de fixation avec la turbine de détente.

Les autres caractéristiques et avantages de l'invention vont apparaître maintenant à la lecture de la description qui va suivre, donnée à titre uniquement illustratif et non limitatif, et à laquelle sont annexées, outre la figure 1 illustrant l'art antérieur :
- la figure 2 qui est une vue partielle en perspective montrant une réalisation modulaire d'une partie de la turbine selon l'invention,
- la figure 3 qui illustre schématiquement une vue de dessus de la figure 2, et
- la figure 4 qui montre l'ensemble de la turbine selon l'invention.

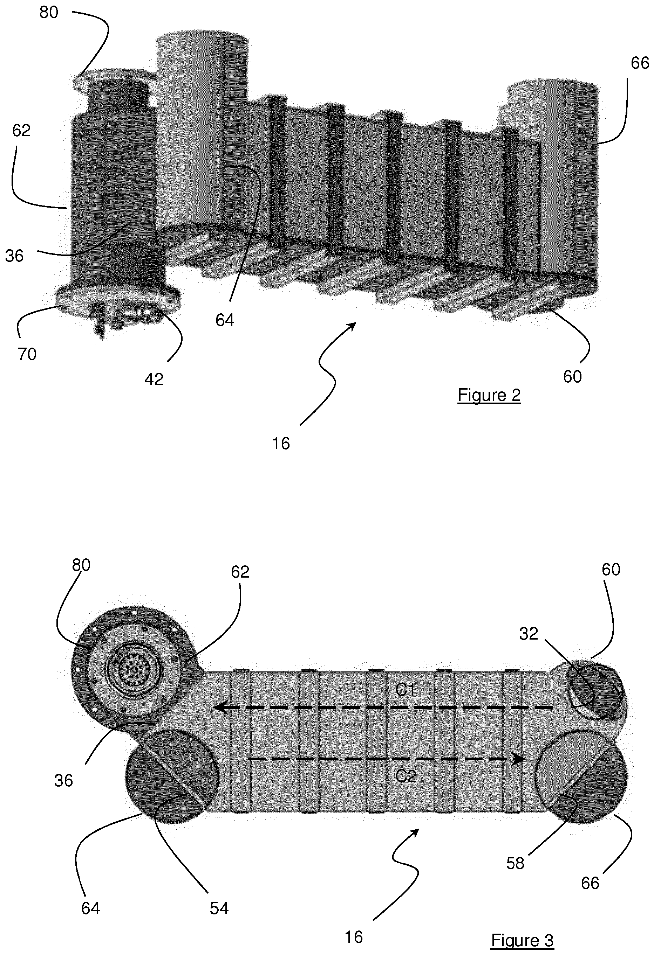

Les figures 2 et 3 sont une illustration d'une première étape d'une réalisation modulaire d'une partie de la turbine qui comprend l'intégration de la chambre de combustion 18 au sein de l'échangeur 20.

Cet échangeur est un échangeur à plaque à flux croisés qui comprend un empilage de deux jeux de plaques placées de manière alternative les unes sur les autres. Ceci permet de pouvoir former un premier courant de circulation d'un premier fluide dans le premier jeu de plaques et un deuxième courant de circulation d'un deuxième fluide dans l'autre jeu de plaques.

Pour cela l'échangeur comprend une boîte collectrice 60 avec l'entrée de gaz comprimé 32, dite boîte collectrice d'entrée, placée à l'une des extrémités de l'échangeur, et une autre boîte collectrice 62 avec la sortie de gaz comprimé chaud 36, dite boîte collectrice de sortie, placée à l'autre extrémité de cet échangeur, qui sont toutes deux en communication avec les canaux formés dans le même jeu de plaques.

Un premier fluide peut donc circuler entre les boîtes collectrices dans le sens de la flèche C1.

Cet échangeur comprend également un collecteur 64 avec l'entrée de gaz détendu surchauffé 54, dit collecteur d'entrée, placé à l'extrémité de l'échangeur opposée à celle où se trouve la boîte collectrice d'entrée 60, et un autre collecteur 66 avec la sortie de gaz détendu refroidi 58, dit collecteur de sortie, placée à l'extrémité de cet échangeur opposée à celle où se trouve la boîte collectrice de sortie 62. Ces deux collecteurs sont en communication avec les canaux formés dans le même jeu de plaques pour permettre la circulation d'un deuxième fluide entre ces collecteurs dans le sens de la flèche C2, opposé au sens C1.

Dans l'exemple de l'invention, le premier fluide est du gaz comprimé venant du compresseur 14 alors que le deuxième fluide est un gaz détendu surchauffé provenant de la turbine de détente 22.

En se rapportant en plus à la figure 4, la chambre de combustion est placée à l'intérieur de la boîte collectrice de sortie 62 avec la particularité que le boîtier de cette chambre est formée par la paroi de cette boîte collectrice.

Comme cela est mieux décrit dans la demande FR 15/59314 du demandeur, la chambre de combustion, dont le boîtier extérieur cylindrique est ici formé par la boîte collectrice 62 de l'échangeur, est fermée à l'une des extrémités de la boîte 62 par une cloison porte-injecteur 70 pour l'injection d'au moins un combustible liquide et/ou gazeux 42. L'autre des extrémités de cette boîte comprend une cloison annulaire 72 avec une ouverture pour le passage d'un tube à flamme 74, également de forme sensiblement cylindrique, logé coaxialement dans la boîte en étant de diamètre inférieur à cette boîte. Ce tube comprend une extrémité fermée par une cloison de diffusion 76 en regard et à distance de la cloison porte-injecteur 70 et une extrémité ouverte 78, formant la sortie de la chambre de combustion, qui traverse la cloison annulaire en coopérant à étanchéité avec le diamètre intérieur de cette cloison annulaire. Avantageusement, la boîte collectrice 62 comprend, au niveau de la sortie 78 du tube à flamme, une semelle de fixation 80. En outre, ce tube à flamme comprend un stabilisateur de flamme 82 qui est placé sur la cloison de diffusion 76 et à l'intérieur du tube.

Ainsi, le gaz comprimé venant de l'échangeur au travers de la sortie de gaz 36 pénètre dans l'espace formé entre la paroi de la boite collectrice 62 et le tube à flamme ainsi que dans l'espace formé entre la cloison porte-injecteur et la cloison de diffusion pour former un mélange carburé apte à brûler.

Bien entendu et cela sans sortir du cadre de l'invention, tout autre type de chambre de combustion peut être utilisé comme celui décrit plus en détail dans le document WO 2012/039611.

De manière à réaliser un module simple et compact de la chambre de combustion avec l'échangeur de chaleur, la boîte collectrice de sortie 62 est utilisée en tant que boîtier de la chambre de combustion et loge tous les autres éléments constitutifs (cloison porte-injecteur 70, tube à flamme 74, stabilisateur de flamme 82, ...) de cette chambre.

Ceci permet également d'augmenter les performances de la turbine en réduisant les surfaces pouvant générer les pertes thermiques tout en limitant les pertes de charges entre l'échangeur et la chambre de combustion.

De plus, cette réalisation modulaire permet une réduction des pertes thermiques entre la sortie de l'échangeur et l'entrée de la chambre de combustion ainsi qu'une réduction du nombre de pièce et par conséquent une réduction du coût de l'ensemble.

Une autre réalisation modulaire permet d'intégrer l'ensemble turbocompresseur au module formé par la chambre de combustion et l'échangeur.

Pour cela, en revenant à la figure 4, le turbocompresseur comprend un compresseur 14 avec une admission de gaz frais 28 et une sortie de gaz comprimé 30, une turbine de détente 22 reliée au compresseur par un arbre 24 et comprenant une entrée de gaz comprimé surchauffé 50 et une sortie de gaz détendu surchauffé 52. L'arbre 24 est prolongé au-delà du compresseur pour être relié à une génératrice 26.

Comme illustré sur cette figure 4, la sortie 30 du compresseur est reliée à la boîte collectrice d'entrée 60 de l'échangeur par un conduit 56 et la sortie 52 de la turbine de détente est connectée au collecteur d'entrée 64 par une conduite 34.

En outre, le carter du turbocompresseur comprend, au voisinage de l'entrée 50 de la turbine 22, une embase de fixation 84.

Pour réaliser un ensemble modulaire comprenant le module échangeur-chambre de combustion et le turbocompresseur, ce dernier est rapporté puis fixé par tous moyens, comme par vissage, sur le module échangeur-chambre de combustion par la jonction de la semelle 80 avec l'embase 84.

La conduite 34 et le conduit 56 sont ensuite fixés, également par tous moyens connus, entre la sortie 52 de la turbine 22 et le collecteur 64 et entre la sortie 30 du compresseur et la boîte collectrice d'entrée 60 de l'échangeur.

Cela permet une facilité de maintenance avec une architecture en deux modules facilement dissociables qui limite le démontage en cas d'intervention ou de maintenance.

De plus, cette configuration permet une limitation des pertes de charges et des pertes thermiques entre la sortie de la chambre de combustion et l'entrée de la turbine.

## Revendications

1. Turbine, notamment turbine avec échangeur de chaleur pour la production d'énergie électrique, comprenant au moins un étage de compression (12) avec au moins un compresseur de gaz (14), un échangeur de chaleur à flux croisés (16) comprenant une boîte collectrice d'entrée (60) de gaz comprimé, une boîte collectrice de sortie (62) de gaz comprimé, un collecteur d'entrée (64) de gaz comprimé surchauffé, un collecteur de sortie (66) de gaz détendu refroidi, une chambre de combustion (18), au moins un étage de détente (20) avec au moins une turbine de détente (22) reliée par un arbre (24) au compresseur, et une génératrice (26), la turbine de détente (22) comprenant une entrée de gaz comprimé surchauffé (50) et une sortie de gaz détendu surchauffé (52), la boîte collectrice de sortie (62) de gaz comprimé comprenant la chambre de combustion (18) et la boîte collectrice de sortie (62) de gaz comprimé étant fermée à l'une de ses extrémités par une cloison porte-injecteur (70) de la chambre de combustion, **caractérisée en ce que** l'arbre (24) est prolongé au-delà du compresseur (14) pour être relié à la génératrice (26).

2. Turbine selon la revendication 1, **caractérisée en ce que** la paroi de la boîte collectrice de sortie (62) de gaz comprimé forme le boîtier de la chambre de combustion.

3. Turbine selon l'une des revendications précédentes, **caractérisée en ce que** la boîte collectrice de sortie (62) porte une embase de fixation (80) avec la turbine de détente.

## Patentansprüche

1. Turbine, insbesondere Turbine mit Wärmetauscher zur Erzeugung elektrischer Energie, die mindestens eine Verdichtungsstufe (12) mit mindestens einem Gasverdichter (14), einen Kreuzstromwärmetauscher (16), der einen Eingangssammelkasten (60) von verdichtetem Gas, einen Ausgangssammelkasten (62) von verdichtetem Gas, einen Eingangskollektor (64) von überhitztem verdichtetem Gas, einen Ausgangskollektor (66) von abgekühltem entspanntem Gas enthält, eine Brennkammer (18), mindestens eine Entspannungsstufe (20) mit mindestens einer Entspannungsturbine (22), die über eine Welle (24) mit dem Verdichter verbunden ist, und einen Generator (26) enthält, wobei die Entspannungsturbine (22) einen Eingang von überhitztem verdichtetem Gas (50) und einen Ausgang von überhitztem entspanntem Gas (52) enthält, wobei der Ausgangssammelkasten (62) von verdichtetem Gas die Brennkammer (18) enthält und der Ausgangssammelkasten (62) von verdichtetem Gas an einem seiner Enden von einer Düsenhalter-Trennwand (70) der Brennkammer verschlossen wird, **dadurch gekennzeichnet, dass** die Welle (24) über den Verdichter (14) hinaus verlängert ist, um mit dem Generator (26) verbunden zu werden.

2. Turbine nach Anspruch 1, **dadurch gekennzeichnet, dass** die Wand des Ausgangssammelkastens (62) von verdichtetem Gas das Gehäuse der Brennkammer bildet.

3. Turbine nach einem der vorhergehenden Ansprüche, **dadurch gekennzeichnet, dass** der Ausgangssammelkasten (62) einen Befestigungssockel (80) mit der Entspannungsturbine aufweist.

## Claims

1. Turbine, in particular a turbine having a heat exchanger for the production of electrical power, comprising at least one compression stage (12) having at least one gas compressor (14), a cross-flow heat exchanger (16) comprising an inlet header (60) for compressed gas, an outlet header (62) for compressed gas, an inlet header (64) for superheated compressed gas, an outlet header (66) for cooled expanded gas, a combustion chamber (18), at least one expansion stage (20) having at least one expansion turbine (22) connected by a shaft (24) to the compressor, and a generator (26), the expansion turbine (22) comprising an inlet for superheated compressed gas (50) and an outlet for superheated expanded gas (52), the outlet header (62) for compressed gas comprising the combustion chamber (18) and the outlet header (62) for compressed gas being closed at one of its ends by an injector-carrier partition (70) of the combustion chamber, **characterized in that** the shaft (24) extends beyond the compressor (14) so as to be connected to the generator (26).

2. Turbine according to Claim 1, **characterized in that** the wall of the outlet header (62) for compressed gas forms the housing of the combustion chamber.

3. Turbine according to either of the preceding claims, **characterized in that** the outlet header (62) bears a base (80) for attachment to the expansion turbine.
